# EUROPEAN PATENT SPECIFICATION

(11) **EP 3 996 918 B1**
(45) Date of publication and mention of the grant of the patent: **15.03.2023**
(21) Application number: 19749814.0
(22) Date of filing: 09.07.2019
(51) Int. Cl.: B32B 27/38, B60C 1/00, C08L 9/06, B32B 25/04, B32B 25/12, B32B 25/14

(54) **A LAMINATE**
LAMINAT
STRATIFIÉ

(43) Date of publication of application: 18.05.2022
(73) Proprietor: COMPAGNIE GENERALE DES ETABLISSEMENTS MICHELIN, 63000 Clermont-Ferrand (FR)
(72) Inventor: SAKURADA, Tomoya, Tokyo 163-1073 (JP)
(74) Representative: Wroblewski, Nicolas Paul André
(86) International application number: PCT/JP2019/027175
(87) International publication number: WO 2021/005718

(56) References cited:
- EP-A1- 2 581 237
- JP-A- H09 278 941

## Description

### Technical Field

The field of the invention is that of laminates intended in particular for articles, for example, tires, shoes, conveyors or caterpillar tracks, in more particular for tires, in still more particular for treads of tires, in especial for treads of tires capable of rolling over ground surface covered with snow.

### Background Art

As is known, the snow tires classified in a category of use "snow", identified by an inscription the alpine symbol ("3-peak-mountain with snowflake"), marked on their sidewalls, mean tires whose tread patterns, tread compounds and/or structures are primarily designed to achieve, in snow conditions, a performance better than that of normal tires intended for normal on-road use with regard to their abilities to initiate, maintain or stop vehicle motion.

### Citation List

### Patent Literature

JP 2018-053179

Snowy ground has a feature of having a low friction coefficient, and a constant objective of manufacturers of rubber articles is improvement of a grip performance of rubber articles on snow-covered (snowy) ground during the service life of rubber articles.

### Summary of Invention

### Technical Problem

During the research, the inventor has discovered that a specific laminate with rubber compositions intended in particular for a rubber article, for example, a tire tread, a shoe sole, a conveyor belt and a caterpillar track tread, which allows an unexpectedly improved grip performance on snowy ground in the worn state while maintaining or improving the grip performance in the new state.

In the present description, unless expressly stated otherwise, all the percentages (%) indicated are percentages by weight (wt%).

The expression "elastomer matrix" is understood to mean, in a given composition, all of the elastomers present in said rubber composition.

The abbreviation "phr" signifies parts by weight per hundred parts by weight of the elastomer matrix in the considered rubber composition.

In the present description, unless expressly indicated otherwise, each Tg_{DSC} (glass transition temperature) is measured in a known way by DSC (Differential Scanning Calorimetry) according to Standard ASTM D3418-08.

Any interval of values denoted by the expression "between a and b" represents the range of values of more than "a" and of less than "b" (i.e. the limits a and b excluded) whereas any interval of values denoted by the expression "from a to b" means the range of values going from "a" to "b" (i.e. including the strict limits a and b).

The expression "based on" should be understood in the present application to mean a composition comprising the mixture(s) and/or the product of the reaction of the various constituents used, some of the constituents being able or intended to react together, at least partly, during the various manufacturing phases of the composition, in particular during the vulcanization (curing).

### Solution to Problem

A first aspect of the invention is a laminate comprising at least two superposed portions comprising a first portion being made of a first rubber composition (FC) and a second portion being made of a second rubber composition (SC), wherein each of the rubber compositions is based on at least an elastomer matrix, a reinforcing filler, and at least one of an epoxy or an epoxy hardener, wherein the amount in phr of the epoxy in the first rubber composition (FC) is lower than that in the second rubber composition (SC), and wherein the amount in phr of the epoxy hardener in the first rubber composition (FC) is higher than that in the second rubber composition (SC).

### Advantageous Effects of Invention

The specific laminate with the rubber compositions allows an unexpectedly improved grip performance on snowy ground in the worn state, while maintaining or improving the grip performance in the new state.

Each of the below aspect(s), the embodiment(s), the instantiation(s), and the variant(s) including each of the preferred range(s) and/or matter(s) may be applied to any one of the other aspect(s), the other embodiment(s), the other instantiation(s) and the other variant(s) of the invention unless expressly stated otherwise.

Each of the rubber compositions (FC and SC) of the tread of the tire according to the invention is based on each elastomer matrix.

Elastomer (or loosely "rubber", the two terms being regarded as synonyms) of the "diene" type is to be understood in a known manner as an (meaning one or more) elastomer derived at least partly (i.e. a homopolymer or a copolymer) from diene monomers (monomers bearing two carbon-carbon double bonds, conjugated or not).

These diene elastomers can be classified into two categories: "essentially unsaturated" or "essentially saturated". Generally, the expression "essentially unsaturated" is understood to mean a diene elastomer resulting at least in part from conjugated diene monomers having a content of units of diene origin (conjugated dienes) which is greater than 15% (mol %); thus it is that diene elastomers such as butyl rubbers or diene/α -olefin copolymers of the EPDM type do not fall under the preceding definition and may especially be described as "essentially saturated" diene elastomers (low or very low content of units of diene origin, always less than 15%). In the category of "essentially unsaturated" diene elastomers, the expression "highly unsaturated" diene elastomer is understood to mean in particular a diene elastomer having a content of units of diene origin (conjugated dienes) which is greater than 50%.

Although it applies to any type of diene elastomer, a person skilled in the art of tires will understand that the invention is preferably employed with essentially unsaturated diene elastomers.

Given these definitions, the expression diene elastomer capable of being used in the compositions in accordance with the invention is understood in particular to mean:
(a) - any homopolymer obtained by polymerization of a conjugated diene monomer, preferably having from 4 to 12 carbon atoms;
(b) - any copolymer obtained by copolymerization of one or more conjugated dienes with one another or with one or more vinyl aromatic compounds preferably having from 8 to 20 carbon atoms.

The following are suitable in particular as conjugated dienes: 1,3-butadiene, 2-methyl-1,3-butadiene, 2,3-di(C₁-C₅ alkyl)-1,3-butadienes, such as, for example, 2,3-dimethyl-1,3-butadiene, 2,3-diethyl-1,3-butadiene, 2-methyl-3-ethyl-1 ,3-butadiene or 2-methyl-3-isopropyl-1 ,3-butadiene, an aryl-1,3-butadiene, 1,3-pentadiene or 2,4-hexadiene. The following, for example, are suitable as vinylaromatic compounds: styrene, ortho-, meta- or para-methylstyrene, the"vinyltoluene" commercial mixture, para-(tert-butyl) styrene, methoxystyrenes, chlorostyrenes, vinylmesitylene, divinylbenzene or vinylnaphthalene.

A second aspect of the invention is the laminate according to the first aspect, wherein each of the rubber compositions is such that the elastomer matrix comprises at least one diene elastomer selected from the group consisting of polybutadienes (BR), natural rubber (NR), synthetic polyisoprenes (1R), butadiene copolymers, and isoprene copolymers, and the combinations thereof.

According to a preferred embodiment of the second aspect, at least one of the rubber compositions, especially each of the rubber compositions, is such that the copolymers are preferably selected from the group consisting of butadiene copolymers the combinations thereof, more preferably selected from the group consisting of styrene-butadiene copolymers (SBR), butadiene-isoprene copolymers (BIR), styrene-isoprene copolymers (SIR), styrene-butadiene-isoprene copolymers (SBIR) and the combinations thereof, still more preferably selected from the group consisting of styrene-butadiene copolymers (SBR) and the combinations thereof.

The diene elastomer may have any microstructure which depends on the polymerization conditions used, in particular on the presence or absence of a modifying and/or randomizing agent and on the amounts of modifying and/or randomizing agent employed. This elastomer may, for example, be a block, statistical, sequential or micro sequential elastomer and may be prepared in dispersion or in solution. This elastomer may be coupled and/or star-branched or else functionalized with a coupling and/or star-branching or functionalizing agent.

According to a more preferred embodiment of the preferred embodiment, at least one of the rubber compositions, especially each of the rubber compositions, is such that the elastomer matrix comprises more than 50 phr and up to 100 phr, preferably 55 to 95 phr, more preferably 60 to 90 phr, still more preferably 65 to 85 phr, particularly 70 to 80 phr, of a first diene elastomer which is a styrene butadiene copolymer(s), preferably a solution styrene butadiene copolymer(s), and the elastomer matrix comprises no second diene elastomer or comprises less than 50 phr, preferably 5 to 45 phr, more preferably 10 to 40 phr, still more preferably 15 to 35 phr, particularly 20 to 30 phr, of a second diene elastomer which is different from the first diene elastomer.

According to a still more preferred embodiment of the above more preferred embodiment, at least one of the rubber compositions, especially each of the rubber compositions, is such that the first diene elastomer exhibits a glass transition temperature (Tg_{DSC}) of less than -40°C (for example, between -40°C and -110°C), preferably less than -45°C (for example, between -45°C and -105°C), more preferably less than -50°C (for example, between -50°C and -100°C), still more preferably less than -55°C (for example, between -55°C and -95°C), particularly at most -60°C (for example, -60°C to - 90°C).

According to a particular embodiment of the above more preferred embodiment or the above still more preferred embodiment, at least one of the rubber compositions, especially each of the rubber compositions, is such that the second diene elastomer is a polybutadiene(s) (BR) more preferably having a content (molar %) of 1,2-units of between 4% and 80% or those having a content (molar %) of cis-1,4-units of greater than 80%, more preferably greater than 90% (molar %), still more preferably greater than or equal to 96% (molar %).

According to a more particular embodiment of the above more preferred embodiment, the above still more preferred embodiment or the above particular embodiment, at least one of the rubber compositions, especially each of the rubber compositions, is such that the styrene-butadiene copolymer exhibits a styrene unit of less than 30% by weight (for example, between 3 and 30% by weight) per 100% by weight of the styrene-butadiene copolymer, preferably less than 27% by weight (for example, between 5 and 27% by weight), more preferably less than 23% by weight (for example, between 7 and 23% by weight), still more preferably less than 20% by weight (for example, between 10 and 20% by weight), particularly at most 18% by weight (for example, from 12 to 18%). The styrene unit can be determined by 1H NMR method in accordance with ISO 21561.

Each of the rubber compositions (FC and SC) of the laminate according to the invention is based on a reinforcing filler.

A third aspect of the invention is the laminate according to the first aspect or the second aspect, wherein each of the rubber compositions is such that the amount of reinforcing filler is more than 10 phr, preferably more than 20 phr, more preferably more than 30 phr, still more preferably more than 40 phr, particularly more than 50 phr.

According to a preferred embodiment of the third aspect, at least one of the rubber compositions, especially at least the first rubber compositions (FC), is such that the amount of reinforcing filler is more than 60 phr, preferably more than 70 phr, still more preferably more than 80 phr, particularly more than 90 phr, more particularly more than 100 phr, still more particularly more than 110 phr.

According to a preferred embodiment of the invention, each of the rubber compositions is such that the amount of reinforcing filler is less than 300 phr.

The reinforcing filler may comprise a reinforcing organic filler (for example, carbon black), a reinforcing inorganic filler (for instance, silica) or the combinations thereof.

Use may be made of any type of reinforcing filler known for its capabilities of reinforcing a rubber composition which can be used for the manufacture of the article, for example a reinforcing organic filler, such as carbon black, or a reinforcing inorganic filler, such as silica, with which a coupling agent is combined in a known way.

A fourth aspect of the invention is the laminate according to any one of the first to the third aspects, wherein at least one of the rubber compositions, especially at least the second rubber composition (SC), is such that the reinforcing filler predominately comprises carbon black, that is, the reinforcing filler comprises more than 50% by weight of carbon black per 100% of the reinforcing filler, preferably the reinforcing filler comprises more than 60%, more preferably more than 70%, still more preferably more than 80%, particularly more than 90%, by weight of carbon black per 100% of the reinforcing filler.

As carbon blacks, all carbon blacks conventionally used in tires ("tire-grade" blacks) are suitable, such as for example reinforcing carbon blacks of the 100, 200 or 300 series in ASTM grades (such as for example, the N115, N134, N234, N326, N330, N339, N347 or N375 blacks), or carbon blacks higher series, the 500, 600, 700 or 800 series in ASTM grades (such as for example the N550, N660, N683, N772, N774 blacks). The carbon blacks might for example be already incorporated in an elastomer matrix, for instance, a diene elastomer, in the form of a masterbatch (see for example applications WO 97/36724 or WO 99/16600).

A fifth aspect of the invention is the laminate according to any one of the first to the fourth aspects, wherein at least one of the rubber compositions, especially at least the first rubber composition (FC), is such that the reinforcing filler predominately comprises a reinforcing filler, that is, the reinforcing filler comprises more than 50% by weight of the reinforcing inorganic filler per 100% of the reinforcing filler, preferably the reinforcing filler comprises more than 60%, more preferably more than 70%, still more preferably more than 80%, particularly more than 90%, by weight of the reinforcing inorganic filler per 100% of the reinforcing filler.

According to a preferred embodiment of the fifth aspect, at least one of the rubber compositions, especially at least the first rubber composition (FC), is such that the reinforcing filler predominately comprises a reinforcing inorganic filler (preferably silica), and carbon black of which the amount is less than 50%, preferably less than 40%, more preferably less than 30%, still more preferably less than 20%, particularly less than 10%, by weight per 100% of the reinforcing filler.

Within each of the aforementioned ranges of content of carbon black in the rubber compositions (FC and SC), there is a benefit of coloring properties (black pigmentation agent) and anti-UV properties of carbon blacks, without furthermore adversely affecting the typical performance provided by the reinforcing inorganic filler, namely low hysteresis loss.

The expression "reinforcing inorganic filler" should be understood here to mean any inorganic or mineral filler, whatever its color and its origin (natural or synthetic), also referred to as "white filler", "clear filler" or even "non-black filler", in contrast to carbon black, capable of reinforcing by itself alone, without means other than an intermediate coupling agent, a rubber composition intended for the manufacture of tires, in other words capable of replacing, in its reinforcing role, a conventional tire-grade carbon black; such a filler is generally characterized, in a known manner, by the presence of hydroxyl (-OH) groups at its surface.

The physical state under the presence of this filler is unimportant, whether it is in the form of powder, microbeads, granules, beads or any other suitable densified form. Of course, the reinforcing inorganic filler of the mixtures of various reinforcing inorganic fillers, preferably of highly dispersible siliceous, aluminous fillers or the combinations thereof is described hereafter.

Mineral fillers of the siliceous type (preferably silica (SiO₂)), the aluminous type (preferably alumina (Al₂O₃)) or the combinations thereof are suitable in particular as the reinforcing inorganic fillers.

According to a preferred embodiment of the fifth aspect, the reinforcing inorganic filler predominately comprises silica, that is, the reinforcing inorganic filler comprises more than 50% by weight of silica per 100% of the reinforcing inorganic filler, preferably the reinforcing filler comprises more than 60%, more preferably more than 70%, still more preferably more than 80%, particularly more than 90%, by weight of silica per 100% of the reinforcing inorganic filler.

The silica may be a type of silica or a blend of several silicas. The silica used may be any reinforcing silica known to a person skilled in the art, in particular any precipitated or pyrogenic silica having a BET surface area and a CTAB specific surface area that are both less than 450 m²/g, preferably from 20 to 400 m²/g, more preferably 50 to 350 m²/g, still more preferably 100 to 300 m²/g, particularly between 150 and 250 m²/g, wherein the BET surface area is measured according to a known method, that is, by gas adsorption using the Brunauer-Emmett-Teller method described in "The Journal of the American Chemical Society", Vol. 60, page 309, February 1938, and more specifically, in accordance with the French standard NF ISO 9277 of December 1996 (multipoint volumetric method (5 points); where gas: nitrogen, degassing: 1 hour at 160°C, relative pressure range p/po: 0.05 to 0.17). The CTAB specific surface area is determined according to the French standard NF T 45-007 of November 1987 (method B). Such silica may be covered or not.

A person skilled in the art will understand that a reinforcing filler of another nature, in particular organic nature, such as carbon black, might be used as filler equivalent to the reinforcing inorganic filler described in the present section, provided that this reinforcing filler is covered with an inorganic layer, such as silica, or else comprises, at its surface, functional sites, in particular hydroxyls, requiring the use of a coupling agent in order to form the connection between the filler and the elastomer. By way of example, mention may be made of carbon blacks for tires, such as described in patent applications WO 96/37547 and WO 99/28380.

Use can be made in particular of silane polysulphides, referred to as "symmetrical" or "asymmetrical" depending on their particular structure, as described, for example, in applications WO 03/002648, WO 03/002649 and WO 2004/033548.

Particularly suitable silane polysulphides correspond to the following general formula (I):
(I) Z - A - Sx - A - Z, in which:
   - x is an integer from 2 to 8 (preferably from 2 to 5);
   - A is a divalent hydrocarbon radical (preferably, C₁-C₁₈ alkylene groups or C₆-C₁₂ arylene groups, more particularly C₁-C₁₀, in particular C₁-C₄, alkylenes, especially propylene);
   - Z corresponds to one of the formulae below: 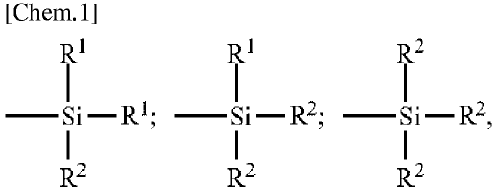 in which:
   - the R¹ radicals which are unsubstituted or substituted and identical to or different from one another, represent a C₁-C₁₈ alkyl, C₅-C₁₈ cycloalkyl or C₆-C₁₈ aryl group (preferably, C₁-C₆ alkyl, cyclohexyl or phenyl groups, in particular C₁-C₄ alkyl groups, more particularly methyl and/or ethyl),
   - the R² radicals which are unsubstituted or substituted and identical to or different from one another, represent a C₁-C₁₈ alkoxyl or C₅-C₁₈ cycloalkoxyl group (preferably a group selected from C₁-C₈ alkoxyls and C₅-C₈ cycloalkoxyls, more preferably a group selected from C₁-C₄ alkoxyls, in particular methoxyl and ethoxyl), are suitable in particular, without limitation of the above definition.

In the case of a mixture of alkoxysilane polysulphides corresponding to the above formula (I), in particular normal commercially available mixtures, the mean value of the "x" indices is a fractional number preferably of between 2 and 5, more preferably of approximately 4. However, the invention can also advantageously be carried out, for example, with alkoxysilane disulphides (x = 2).

Mention will more particularly be made, as examples of silane polysulphides, of bis((C₁-C₄)alkoxyl(C₁-C₄)alkylsilyl(C₁-C₄)alkyl)polysulphides (in particular disulphides, trisulphides or tetrasulphides), such as, for example, bis(3-trimethoxysilylpropyl) or bis(3-triethoxysilylpropyl)polysulphides. Use is in particular made, among these compounds, of bis(3-triethoxysilylpropyl)tetrasulphide, abbreviated to TESPT, of formula [(C₂H₅O)₃Si(CH₂)₃S₂]₂, or bis(3-triethoxysilylpropyl)disulphide, abbreviated to TESPD, of formula [(C₂HSO)₃ Si(CH₂)₃S]₂. Mention will also be made, as preferred examples, of bis(mono(C₁-C₄ )alkoxyldi(C₁-C₄)alkylsilylpropyl)polysulphides (in particular disulphides, trisulphides or tetrasulphides), more particularly bis(monoethoxydimethylsilylpropyl)tetrasulphide, as described in patent application WO 02/083782 (or US 7 217 751).

Mention will in particular be made, as coupling agent other than alkoxysilane polysulphide, of bifunctional POSs (polyorganosiloxanes) or of hydroxysilane polysulphides (R² = OH in the above formula (I)), such as described in patent applications WO 02/30939 (or US 6 774 255) and WO 02/31041 (or US 2004/051210), or of silanes or POSs carrying azodicarbonyl functional groups, such as described, for example, in patent applications WO 2006/125532, WO 2006/125533 and WO 2006/125534.

As examples of other silane sulphides, mention will be made, for example, of the silanes bearing at least one thiol (-SH) function (referred to as mercaptosilanes) and/or at least one blocked thiol function, such as described, for example, in patents or patent applications US 6 849 754, WO 99/09036, WO 2006/023815, WO 2007/098080, WO 2008/055986 and WO 2010/072685.

Of course, use could also be made of mixtures of the coupling agents described previously, as described in particular in the aforementioned patent application WO 2006/125534.

According to a preferred embodiment of the invention, at least one of the rubber compositions, especially at least the first rubber composition (FC), comprises a reinforcing inorganic filler (preferably silica), and a coupling agent of which the amount is from 0.5 to 15% by weight per 100% by weight of the reinforcing inorganic filler (preferably silica).

According to a preferred embodiment of the invention, at least one of the rubber compositions, especially at least the first rubber composition (FC) comprises a reinforcing inorganic filler (preferably silica), and a coupling agent of which the amount is less than 30 phr (for example, between 0.1 and 30 phr), preferably less than 25 phr (for example, between 0.5 and 25 phr), more preferably less than 20 phr (for example, between 1 and 20 phr), still more preferably less than 15 phr (for example, between 1.5 and 15 phr).

Each of the rubber compositions (FC and SC) of the laminate according to the invention is based on at least one of an epoxy or an epoxy hardener, wherein the amount in phr of the epoxy in the first rubber composition (FC) is lower than that in the second rubber composition (SC), and wherein the amount in phr of the epoxy hardener in the first rubber composition (FC) is higher than that in the second rubber composition (SC).

The epoxy comprises at least one compound whose molecule comprises at least one epoxide functional group which is a three-membered ring comprising an oxygen atom and two carbon atoms. The epoxy may harden by reacting with at least one co-reactant which is the epoxy hardener.

A sixth aspect of the invention is the laminate according to any one of the first to the fifth aspects, wherein the first rubber composition (FC) is such that the amount of epoxy is less than 20 phr, preferably less than 15 phr, more preferably less than 10 phr, still more preferably less than 5 phr, particularly less than 1 phr.

According to a preferred embodiment of the sixth aspect, the first rubber composition (FC) is such that the amount of epoxy is 0 phr, that is, the first rubber composition (FC) is free of the epoxy.

A seventh aspect of the invention is the laminate according to any one of the first to the sixth aspects, wherein the second rubber composition (SC) is such that the amount of epoxy is at least 1 phr, preferably at least 5 phr, more preferably at least 10 phr, still more preferably at least 15 phr, particularly at least 20 phr.

According to a preferred embodiment of the invention, the second rubber composition (SC) is such that the amount of epoxy is at most 50 phr.

An eighth aspect of the invention is the laminate according to any one of the first to the seventh aspects, wherein each of the rubber compositions is such that the epoxy comprises at least one epoxy resin comprising at least two, preferably more than two, more preferably at least three, epoxide functional groups in a molecule.

According to a preferred embodiment of the eighth aspect, the epoxy resin is selected from the group consisting of glycidyl ether epoxy resin(s), glycidyl amine epoxy resin(s), glycidyl ester epoxy resin(s), olefin oxidation (alicyclic) epoxy resin(s) and the combinations thereof, preferably selected from the group consisting of glycidyl ether epoxy resin(s) and the combinations thereof, more preferably selected from the group consisting of di-functional glycidyl ether epoxy resin(s), multi-functional glycidyl ether epoxy resin(s) and the combinations thereof, still more preferably selected from the group consisting multi-functional glycidyl ether epoxy resin(s) and the combinations thereof, particularly the multi-functional glycidyl ether epoxy resin(s) selected from the group consisting of oligomer epoxy resin(s), monomer epoxy resin(s) and the combinations thereof.

A ninth aspect of the invention is the laminate according to the eighth aspect, wherein the epoxy resin has a viscosity of less than 2000 mPa · s, preferably less than 1500 mPa · s, more preferably less than 1000 mPa · s, still more preferably less than 500 mPa · s, at 150°C.

The above viscosity at 150°C can measured in accordance with ASTM D4287.

A tenth aspect of the invention is the laminate according to the eighth aspect or the ninth aspect, wherein the epoxy resin has an epoxy equivalent weight of less than 500 g/eq, preferably less than 400 g/eq, more preferably less than 300 g/eq, still more preferably less than 200 g/eq, particularly less than 190 g/eq, more particularly less than 180 g/eq, still more particularly less than 170 g/eq.

The epoxy equivalent can be determined in accordance with ISO 3001.

An eleventh aspect of the invention is the laminate according to any one of the first to the tenth aspects, wherein the first rubber composition (FC) is such that the amount of epoxy hardener at least 1 phr, preferably at least 5 phr, more preferably at least 10 phr, still more preferably at least 15 phr, particularly at least 20 phr.

According to a preferred embodiment of the invention, the first rubber composition (FC) is such that the amount of epoxy hardener is at most 50 phr.

A twelfth aspect of the invention is the laminate according to any one of the first to the eleventh aspects, wherein the second rubber composition (SC) is such that the amount of epoxy hardener is less than 20 phr, preferably less than 15 phr, more preferably less than 10 phr, still more preferably less than 5 phr, particularly less than 1 phr.

According to a preferred embodiment of the twelfth aspect, the second rubber composition (SC) is such that the amount of epoxy hardener is 0 phr, that is, the second rubber composition is free of the epoxy hardener.

A thirteenth aspect of the invention is the laminate according to any one of the first to the twelfth aspects, wherein each of the rubber compositions is such that the epoxy hardener comprises at least one compound selected from the group consisting of amine compound(s) (for example, polyamidoamine(s), aliphatic amine(s), alicyclic amine(s), aromatic amine(s), fatty aromatic amine(s), amine(s) having ether bond(s), amine(s) having hydroxyl group(s), polyoxypropylene amine(s), modified amine(s) (for example, epoxy modified amine(s), Mannich modified amine(s), amine(s) modified by Michael addition(s), amine salt compound(s) (for example, boron trifluoride amine complex compound(s))), amide compound(s) (for example, polyamide obtained by reacting polyamine), isocyanate compound(s), aromatic diazonium salt compound(s), guanidino compound(s), thiol compound(s) (for example, polythiol), aromatic sulfonium salt compound(s), phenol compound(s), acid anhydride compound(s), basic active hydrogen compound(s), and the combinations thereof, preferably selected from the group consisting of amine compound(s), amide compound(s), isocyanate compound(s), aromatic diazonium salt compound(s), guanidino compound(s), aromatic sulfonium salt compound(s), basic active hydrogen compound(s), and the combinations thereof, more preferably selected from the group consisting of amine compound(s), amide compound(s) and the combinations thereof, still more preferably selected from the group consisting of amidoamine(s) and the combinations thereof, particularly selected from the group consisting of polyamidoamine(s) and the combinations thereof.

A fourteenth aspect of the invention is the laminate according to any one of the first to the thirteenth aspects, wherein each of the rubber compositions is such that the epoxy hardener has a viscosity of at least 1000 mPa · s, preferably at least 2000 mPa · s, more preferably at least 3000 mPa · s, still more preferably at least 4000 mPa · s, particularly at least 5000 mPa · s, more particularly at least 6000 mPa · s, still more particularly at least 7000 mPa · s, advantageously at least 8000 mPa · s, more advantageously at least 9000 mPa · s, still more advantageously at least 10000 mPa · s, at 25°C.

According to a preferred embodiment of the invention, each of the rubber compositions (FC and SC) is such that the epoxy hardener has a viscosity of at most 1000000 mPa · s, preferably at most 500000 mPa · s, at 25°C.

The above viscosity at 25°C can measured in accordance with ASTM D4287.

Each of the rubber compositions (FC and SC) of the laminates according to the invention may be based on all or a portion(s) of the usual additives generally used in the elastomer composition(s) intended in particular for articles (for example, tires, shoes, conveyors or caterpillar tracks), in more particular for tires, in still more particular for snow tires or winter tires, such as, for example, protection agents, such as antiozone waxes, chemical antiozonants, antioxidants, plasticizing agent (for example, liquid plasticizer(s), hydrocarbon resin(s)), tackifying resins, a crosslinking system based on sulphur, vulcanization accelerator(s), vulcanization activator(s) or the combinations thereof.

These compositions can be also based on coupling activators when a coupling agent is used, agents for covering the reinforcing inorganic filler or more generally processing aids capable, in a known way, by virtue of an improvement in the dispersion of the filler in the rubber matrix and of a lowering of the viscosity of the compositions, of improving their property of processing in the raw state; these agents are, for example, hydrolysable silanes, such as alkylalkoxysilanes, polyols, polyethers, or hydroxylated or hydrolysable polyorganosiloxanes.

Each of the rubber compositions (FC and SC) of the laminate according to the invention may be manufactured in appropriate mixers using two successive preparation phases well known to a person skilled in the art: a first phase of thermomechanical working or kneading (referred to as "non-productive" phase) at high temperature, up to a maximum temperature of between 110°C and 190°C, preferably between 130°C and 180°C, followed by a second phase of mechanical working (referred to as "productive" phase) at a lower temperature, typically of less than 110°C, for example between 40°C and 100°C, finishing phase during which sulphur and the vulcanization accelerator in the crosslinking system are incorporated.

A process which can be used for the manufacture of each of such compositions (FC and SC) comprises, for example and preferably, the following steps:
- incorporating in the elastomer matrix(es), for instance, the diene elastomer(s), in a mixer, the reinforcing filler, at least one of the epoxy or the epoxy hardener, during a first stage (referred to as a "non productive" stage) everything being kneaded thermo-mechanically (for example in one or more steps) until a maximum temperature of between 110°C and 190°C is reached;
- cooling the combined mixture to a temperature of less than 100°C;
- subsequently incorporating, during a second stage (referred to as a "productive" stage), sulphur and the vulcanization accelerator in the crosslinking system; and
- kneading everything up to a maximum temperature of less than 110°C.

By way of example, the first (non-productive) phase is carried out in a single thermomechanical stage during which all the necessary constituents are introduced into an appropriate mixer, such as a standard internal mixer, followed, in a second step, for example after kneading for 1 to 2 minutes, by the other additives, optional additional filler-covering agents or processing aids, with the exception of sulphur and the vulcanization accelerator in the crosslinking system. The total kneading time, in this non-productive phase, is preferably between 1 and 15 min.

After cooling the mixture thus obtained, sulphur and the vulcanization accelerator in the crosslinking system are then incorporated at low temperature (for example, between 40°C and 100°C), generally in an external mixer, such as an open mill; the combined mixture is then mixed (the second (productive) phase) for a few minutes, for example between 2 and 15 min.

According to a preferred embodiment of the invention, each of the rubber compositions (FC and SC) is further based on a crosslinking system.

According to a more preferred embodiment of the preferred embodiment, the crosslinking system is based on sulphur, vulcanization activator(s) or the combinations thereof. The amount of sulphur is preferably between 0 and 10 phr. The sulphur in the crosslinking (or vulcanization) system is to say vulcanization sulphur which may be sulphur, sulphur derived from a sulphur-donating agent or the combinations thereof. The vulcanization activator(s) may be based on zinc (pure zinc and/or zinc derivatives (for example, zinc fatty acid salt)), fatty acid (in particular, stearic acid) or the combinations thereof.

According to a still more preferred embodiment of the preferred embodiment or the more preferred embodiment, the crosslinking system is based on at least one vulcanization accelerator, preferably the amount of vulcanization accelerator is between 0 and 10 phr. The vulcanization accelerator can promote the sulphur vulcanization reaction in each of the rubber compositions.

According to a particular embodiment of the preferred embodiment, the more preferred embodiment or the still more preferred embodiment, the first rubber composition (FC) is such that the vulcanization accelerator is a vulcanization accelerator other than sulphenamide type vulcanization accelerator.

In the above particular embodiment, the sulphenamide type vulcanization accelerator may be N-cyclohexyl-2-benzothiazole sulfenamide (CBS), N-tert-butyl-2-benzothiazole sulfenamide (TBBS), 2-(4-morpholinothio)-benzothiazole (MBS), N,N'-dicyclohexyl-2-benzothiazole sulfenamide (DCBS) or the combinations thereof.

According to a more particular embodiment of the particular embodiment, the vulcanization accelerator is selected from the group consisting of thiazole type vulcanization accelerator(s), thiourea type vulcanization accelerator(s), thiuram type vulcanization acclerator(s), dithiocarbamate type vulcanization accelerator(s) and the combinations thereof, preferably selected from the group consisting of thiazole type vulcanization accelerator(s), thiuram type vulcanization acclerator(s), dithiocarbamate type vulcanization accelerator(s) and the combinations thereof.

According to a still more particular embodiment of the particular embodiment or the more particular embodiment, the vulcanization accelerator is a cyclic compound, preferably an unsaturated cyclic compound.

The cyclic compound is a compound whose molecule comprising at least one ring (for example, homocyclic ring(s), heterocyclic ring(s)) formed with at least three atoms connected.

The unsaturated cyclic compound is a cyclic compound whose molecule comprising at least one ring formed with at least three atoms connected, and the ring has at least one unsaturated bond (for example, benzene, benzothiazole)

According to an advantageous embodiment of the particular embodiment, the more particular embodiment or still more particular embodiment, the vulcanization accelerator is a sulphur-based vulcanization accelerator, that mean the vulcanization comprises at least one sulphur atom in a molecule, preferably the vulcanization accelerator is selected from the group consisting of 2-2'-dithiobis(benzothiazole) (MBTS), zinc-2-mercaptobenzothiazole (ZMBT), Tetrabenzylthiuram disulfide (TBzTD), zinc ethylphenyldithiocarbamate (ZEPC), zinc dibenzyldithiocarbamate (ZDBzC) and the combinations thereof.

Each of the final compositions thus obtained is subsequently extruded or calendered, for example in the form of a sheet or of a plaque, in particular for laboratory characterization, or else extruded in the form of a rubber profiled element which can be used directly as a laminate or an article, for example, a tire tread, a shoe sole, a conveyor belt and a caterpillar track tread.

As for making the laminate according to the invention, it is possible to build a first layer of a homogeneous rubber composition, as the first rubber composition (FC), and a second layer of a homogeneous rubber composition, as the second rubber composition (SC), then to superpose the first layer onto the second layer or then to superpose the second layer onto the first layer, or to sandwich the other layer(s) or portion(s) between the first layer and the second layer, to get the laminate of the article.

According to a preferred embodiment of the invention, the first portion is adjacent to the second portion.

A preferred embodiment of the invention is an article comprising a laminate according to the invention.

According to a more preferred embodiment of the preferred embodiment, the article is intended to contact with the ground.

According to a still more preferred embodiment of the more preferred embodiment, the first portion is arranged nearer to the ground than the second portion. In case of that the article is a tire, the superposed portions which are the first portion and the second portion are radially superposed portions, that is, the first portion is radially exterior to the second portion.

According to another still more preferred embodiment of the more preferred embodiment, the second portion is arranged nearer to the ground than the first portion. In case of that the article is a tire, the superposed portions which are the first portion and the second portion are radially superposed portions, that is, the second portion is radially exterior to the first position.

The "radially" means "in the radial direction" which is a direction perpendicular to the axis of the rotation of a tire.

According to a particular embodiment of the preferred embodiment, the more preferred embodiment, the still more preferred embodiment or the other still more preferred embodiment, at least one of the first portion or the second portion, preferably each of the portions, is intended to come into contact with the ground during the service life of article.

The service life means the duration to use the article (for example, the term from the new state to the final state of the article, in case of that the article is a tire, the final state means a state on reaching the wear indicator bar(s) in the tread of tire).

According to a more particular embodiment of the preferred embodiment, the more preferred embodiment, the still more preferred embodiment, the other still more preferred embodiment or the particular embodiment, the article is a tire (for example, a tire tread), a shoe (for example, a shoe sole), a conveyor (for example, a conveyor belt) or a caterpillar track (a caterpillar track tread), preferably a tire, a shoe or a caterpillar track, more preferably a tire tread, a shoe sole or a caterpillar track tread, still more preferably a tire tread.

According to a still more particular embodiment of the preferred embodiment, the more preferred embodiment, the still more preferred embodiment, the other still more preferred embodiment, the particular embodiment or the more particular embodiment, the article is a tire comprising several tire parts which are a tread intended to at least partially contact with the ground, two sidewalls intended to contact with the outside air, but not to contact with the ground, two beads, a crown prolonged by two sidewalls ended by two beads, a carcass reinforcement formed at least one ply reinforced by radial textile cards, the carcass reinforcement passing into the crown and the sidewalls and the carcass reinforcement anchored in the two beads, preferably further comprising crown reinforcement placed between carcass reinforcement and the tread, more preferably further comprising an inner liner intended to protect the carcass reinforcement from diffusion of air coming from a space inside the tire, and the inner liner placed radially inner than carcass reinforcement.

According to an advantageously embodiment of the still more particular embodiment, the laminate according to the fourteenth aspect is placed in at least one of the above tire parts, between two of the above tire parts, radially outer than one of the above tire parts, radially inner than one of the above tire parts or the combinations thereof.

A fifteenth aspect of the invention is a tire comprising a laminate according to any one of the first to the fourteenth aspects, preferably wherein the tire comprises a tread comprising a laminate according to any one of the first to the fourteenth aspects.

According to a preferred embodiment of the fifteenth aspect, the tire is a snow tire.

According to a more preferred embodiment of the fifteenth aspect or the preferred embodiment, the tires are particularly intended to equip passenger motor vehicles, including 4×4 (four-wheel drive) vehicles and SUV (Sport Utility Vehicles) vehicles, and industrial vehicles particularly selected from vans and heavy duty vehicles (i.e., bus or heavy road transport vehicles (lorries, tractors, trailers)).

The vulcanization (or curing) is carried out in a known way at a temperature generally of between 110°C and 190°C for a sufficient time which can vary, for example, between 5 and 90 min depending in particular on the curing temperature, the vulcanization system adopted and the vulcanization kinetics of the composition(s) under consideration.

The invention relates to the rubber composition(s), to the laminate(s), to the article(s), to the tire (s) and the tire tread(s) described above, both in the raw state (i.e., before curing) and in the cured state (i.e., after crosslinking or vulcanization).

The invention is further illustrated by the following non-limiting examples.

### Example

In the test, eight rubber compositions (C-1 to C-8) were used. The rubber compositions are based on a diene elastomer (a blend of SBR and BR) reinforced with carbon black or a blend of silica (as a reinforcing inorganic filler) and carbon black, at least one of an epoxy comprising an epoxy resin or an epoxy hardener comprising a polyamidoamine and a crosslinking system based on sulphur and 2-mercaptobenzothiazyl disulfide (as a cycle compound that is a sulphur-based vulcanization accelerator other than sulphenamide type vulcanization accelerator) or N-dicyclohexyl-2-benzothiazolesulphenamide (as a sulphenamide type vulcanization). The formulations of the rubber compositions are given at Table 1 with the content of the various products expressed in phr.

Each rubber composition was produced as follows: The reinforcing filler, at least one of the epoxy or the epoxy hardener, the elastomer matrix and the various other ingredients, with the exception of sulphur and the vulcanization accelerator in the crosslinking system, were successively introduced into an internal mixer having an initial vessel temperature of approximately 60°C; the mixer was thus approximately 70% full (% by volume). Thermomechanical working (non-productive phase) was then carried out in one stage, which lasts in total approximately 3 to 4 minutes, until a maximum "dropping" temperature of 165°C was reached. The mixture thus obtained was recovered and cooled and then sulphur and the sulphenamide type vulcanization accelerator were incorporated on an external mixer (homofinisher) at 20 to 30°C, everything being mixed (productive phase) for an appropriate time (for example, between 5 and 12 min).

The rubber compositions thus obtained were subsequently calendered, either in the form of sheets (thickness of 2 to 3 mm) or of fine sheets of rubber, for the measurement of their physical or mechanical properties, or in the form of profiled elements which could be used directly, after cutting and/or assembling to the desired dimensions, for example as tire semi-finished products, in particular as tire treads.

In order to confirm the effect of the invention, eight tires (T-1 to T-6: examples according to the invention, T-7: a reference, T-8: a comparative example) having treads comprising laminates comprising a radially external portion being made of a first rubber composition and a radially internal portion being made of a second rubber composition, the radially external portion being adjacent to the radially internally portion, the laminate being produced by superposition of the sheets of the rubber compositions (C-1 to C-8) respectively which are the first rubber composition or the second rubber composition, as shown in Table 2, are compared.

These tires, as snow tires having treads comprising grooves circumferentially and/or axially extending, were conventionally manufactured and in all respects identical apart from the rubber compositions and the laminates of the tire treads. These tires are radial carcass passenger vehicle tires and the size of them is 205/55R16.

As snow braking test, a 1,400 cc passenger car provided on all of the four wheels with the same kind of these tires (in the new state) under 220 kPa of tire inflation pressure mounted onto 6.5Jxl6 rim was run on a snow covered road at a temperature of -10 °C, the deceleration from 50 to 5 km/h during sudden longitudinal braking while anti-lock braking system (ABS) activated was measured. The above snow tests were conducted on a hard pack snow with a CTI penetrometer reading of about 90 in accordance with Standard ASTM F1805.

Furthermore, all of the tires, except for T-8, were fitted to the front and rear axles of motor vehicles, under nominal tire inflation pressure, and were subjected to rolling on a circuit in order to reproduce the tires in the worn state. Then, the above snow braking test was done with the worn tires. Each of the worn tires was still in the service life, and in each of them, each radially internal portion made of each second rubber composition at least partially appeared on each tread surface and could at least partially contact with the ground.

The results of the braking tests on snow road are reported in Table 2, in relative units, the base 100 being selected for the reference T-7 (it should be remembered that a value of greater than 100 indicates an improved performance).

The results from Table 2 demonstrate that the examples T-1 to T-6 according to the invention have certainly higher values of the grip performance on snow than that of the reference T-7 in the worn state, and while in new state, maintaining or improving the grip performance in comparison with the reference T-7 and the comparative example T-8.

In conclusion, the laminate according to the invention allows an unexpectedly improved grip performance on snowy ground in the worn state, while maintaining or improving the grip performance in the new state.

**[Table 1]**

| | C-1 | C-2 | C-3 | C-4 | C-5 | C-6 | C-7 | C-8 |
|---|---|---|---|---|---|---|---|---|
| SBR (1) | 75 | 75 | 75 | 75 | 75 | 75 | 75 | 75 |
| BR (2) | 25 | 25 | 25 | 25 | 25 | 25 | 25 | 25 |
| Carbon black (3) | 60 | 60 | 60 | 60 | 60 | 60 | 1 | 1 |
| Silica (4) | | | | | | | 120 | 120 |
| Coupling agent (5) | | | | | | | 9.6 | 9.6 |
| Epoxy 1(6) | 21 | 16 | 11 | | | | | 21 |
| Epoxy 2 (7) | | | | 21 | | | | |
| Epoxy 3 (8) | | | | | 21 | | | |
| Epoxy 4 (9) | | | | | | 21 | | |
| Epoxy hardener (10) | | | | | | | 21 | 21 |
| Liquid plasticizer 1 (11) | 20 | 20 | 20 | 20 | 20 | 20 | | |
| Liquid plasticizer 2 (12) | | | | | | | 26 | 26 |
| Hydrocarbon resin (13) | | | | | | | 55 | 55 |
| Stearic acid | 3 | 3 | 3 | 3 | 3 | 3 | 3 | 3 |
| Zinc oxide | 3 | 3 | 3 | 3 | 3 | 3 | 3 | 3 |
| Sulphur | 4 | 4 | 4 | 4 | 4 | 4 | 4 | 4 |
| Vulcanization accelerator 1 (14) | 2 | 2 | 2 | 2 | 2 | 2 | 2 | |
| Vulcanization accelerator 2 (15) | | | | | | | | 2 |

| | | | | | | | | |
|---|---|---|---|---|---|---|---|---|
| (1) Solution SBR with 16% of styrene unit and 24% of unit 1,2 of the butadiene part (Tg_{DSC} = -65°C); (2) BR with 0.3% of 1,2 vinyl; 2.7% of trans; 97% of cis-1,4 (Tg_{DSC} = -105°C); (3) Carbon black (ASTM grade N234 from Cabot); (4) Silica ("Zeosil 1165MP" from Rhodia (CTAB, BET: about 160 m²/g)); (5) Coupling agent TESPT ("Si69" from Evonik); (6) Tris(4-hydroxyphenyl)methane triglycidyl ether (from Sigma-Aldrich, viscosity at 150°C: 43 mPa · s, epoxy equivalent weight: 160 g/eq); (7) EPPN-501H (from Nippon Kayaku, viscosity at 150°C: 80 mPa · s, epoxy equivalent weight: 167 g/eq); (8) EPCLON HP-4700 (from DIC Corporation, viscosity at 150°C: 450 mPa · s, epoxy equivalent weight: 165 g/eq); (9) EOCN-104S (from Nippon Kayaku, viscosity at 150°C: 3000 mPa · s, epoxy equivalent weight: 218 g/eq); (10) Epoxy hardener (polyamidoamine type epoxy hardener, "AP-032 1500 hardener" from Cemedine, viscosity at 25°C: 55000 mPa · s, polyamidoamine: 100%, Triethylenetetramine: 1.4%, Tetraethylenepentamine: 6.4%); (11) MES oil ("Catenex SNR" from Shell); (12) Oleic sunflower oil ("Agripure 80" from Cargill, Weight percent oleic acid: 100%); (13) Hydrocarbon resin C5/C9 type ("Escorez ECR-373" from Exxon, Tg_{DSC}= 44°C); (14) 2-mercaptobenzothiazyl disulfide ("Nocceler DM-P (DM) [MBTS]" from Ouchi Shinko Chemical Industrial); (15) N-dicyclohexyl-2-benzothiazolesulphenamide ("Santocure CBS" from Flexsys). | | | | | | | | |

**[Table 2]**

| | T-1 | T-2 | T-3 | T-4 | T-5 | T-6 | T-7 | T-8 |
|---|---|---|---|---|---|---|---|---|
| First rubber composition | C-7 | C-7 | C-7 | C-7 | C-7 | C-7 | C-7 | C-8 |
| Second rubber composition | C-1 | C-2 | C-3 | C-4 | C-5 | C-6 | C-7 | C-8 |
| Snow braking in the new state | 100 | 100 | 100 | 100 | 100 | 100 | 100 | 80 |
| Snow braking in the worn state | 128 | 126 | 124 | 128 | 127 | 103 | 100 | - |

## Claims

1. A laminate comprising at least two superposed portions comprising a first portion being made of a first rubber composition (FC) and a second portion being made of a second rubber composition (SC); wherein each of the rubber compositions is based on at least:
- an elastomer matrix;
- a reinforcing filler; and
- at least one of an epoxy or an epoxy hardener;
wherein the amount in phr of the epoxy in the first rubber composition (FC) is lower than that in the second rubber composition (SC), and wherein the amount in phr of the epoxy hardener in the first rubber composition (FC) is higher than that in the second rubber composition (SC).

2. The laminate according to Claim 1, wherein each of the rubber compositions is such that the elastomer matrix comprises at least one diene elastomer selected from the group consisting of polybutadienes, natural rubber, synthetic polyisoprenes, butadiene copolymers, isoprene copolymers, and the combinations thereof.

3. The laminate according to Claim 1 or Claim 2, wherein each of the rubber compositions is such that the amount of reinforcing filler is more than 10 phr.

4. The laminate according to any one of Claims 1 to 3, wherein at least one of the rubber compositions is such that the reinforcing filler predominately comprises carbon black.

5. The laminate according to any one of Claims 1 to 4, wherein at least one of the rubber compositions is such that the reinforcing filler predominately comprises a reinforcing inorganic filler, preferably wherein the reinforcing inorganic filler predominately comprises silica.

6. The laminate according to any one of Claims 1 to 5, wherein the first rubber composition (FC) is such that the amount of epoxy is less than 20 phr.

7. The laminate according to any one of Claims 1 to 6, wherein the second rubber composition (SC) is such that the amount of epoxy is at least 1 phr.

8. The laminate according to any one of Claims 1 to 7, wherein each of the rubber compositions is such that the epoxy comprises at least one epoxy resin comprising at least two epoxide functional groups in a molecule.

9. The laminate according to Claim 8, wherein the epoxy resin has a viscosity of less than 2000 mPa · s at 150°C.

10. The laminate according to Claim 8 or Claim 9, wherein the epoxy resin has an epoxy equivalent weight of less than 500 g/eq.

11. The laminate according to any one of Claims 1 to 10, wherein the first rubber composition (FC) is such that the amount of epoxy hardener at least 1 phr.

12. The laminate according to any one of Claims 1 to 11, wherein the second rubber composition (SC) is such that the amount of epoxy hardener is less than 20 phr.

13. The laminate according to any one of Claims 1 to 12, wherein each of the rubber compositions is such that the epoxy hardener comprises at least one compound selected from the group consisting of amine compound(s), amide compound(s), isocyanate compound(s), aromatic diazonium salt compound(s), guanidino compound(s), thiol compound(s), aromatic sulfonium salt compound(s), phenol compound(s), acid anhydride compound(s), basic active hydrogen compound(s), and the combinations thereof.

14. The laminate according to any one of Claims 1 to 13, wherein each of the rubber compositions is such that the epoxy hardener has a viscosity of at least 1000 mPa · s at 25°C.

15. A tire comprising a laminate according to any one of Claims 1 to 14, preferably wherein the tire comprises a tread comprising a laminate according to any one of Claims 1 to 14.

## Patentansprüche

1. Laminat, umfassend mindestens zwei überlagerte Teile, umfassend einen ersten Teil aus einer ersten Kautschukzusammensetzung (FC) und einen zweiten Teil aus einer zweiten Kautschukzusammensetzung (SC);
wobei jede der Kautschukzusammensetzungen auf mindestens:
- einer Elastomermatrix;
- einem verstärkenden Füllstoff und
- einem Epoxid und/oder einem Epoxidhärter
basiert; wobei die Menge in phr des Epoxids in der ersten Kautschukzusammensetzung (FC) niedriger ist als in der zweiten Kautschukzusammensetzung (SC) und wobei die Menge in phr des Epoxidhärters in der ersten Kautschukzusammensetzung (FC) höher ist als in der zweiten Kautschukzusammensetzung (SC).

2. Laminat nach Anspruch 1, wobei jede der Kautschukzusammensetzungen so beschaffen ist, dass die Elastomermatrix mindestens ein Dienelastomer aus der Gruppe bestehend aus Polybutadienen, Naturkautschuk, synthetischen Polyisoprenen, Butadien-Copolymeren, Isopren-Copolymeren und den Kombinationen davon umfasst.

3. Laminat nach Anspruch 1 oder 2, wobei jede der Kautschukzusammensetzungen so beschaffen ist, dass die Menge an verstärkendem Füllstoff mehr als 10 phr beträgt.

4. Laminat nach einem der Ansprüche 1 bis 3, wobei mindestens eine der Kautschukzusammensetzungen so beschaffen ist, dass der verstärkende Füllstoff überwiegend Ruß umfasst.

5. Laminat nach einem der Ansprüche 1 bis 4, wobei mindestens eine der Kautschukzusammensetzungen so beschaffen ist, dass der verstärkende Füllstoff überwiegend einen verstärkenden anorganischen Füllstoff umfasst, vorzugsweise wobei der verstärkende anorganische Füllstoff überwiegend Kieselsäure umfasst.

6. Laminat nach einem der Ansprüche 1 bis 5, wobei die erste Kautschukzusammensetzung (FC) so beschaffen ist, dass die Menge an Epoxid weniger als 20 phr beträgt.

7. Laminat nach einem der Ansprüche 1 bis 6, wobei die zweite Kautschukzusammensetzung (SC) so beschaffen ist, dass die Menge an Epoxid mindestens 1 phr beträgt.

8. Laminat nach einem der Ansprüche 1 bis 7, wobei jede der Kautschukzusammensetzungen so beschaffen ist, dass das Epoxid mindestens ein Epoxidharz mit mindestens zwei epoxidfunktionellen Gruppen in einem Molekül umfasst.

9. Laminat nach Anspruch 8, wobei das Epoxidharz eine Viskosität von weniger als 2000 mPa·s bei 150 °C aufweist.

10. Laminat nach Anspruch 8 oder Anspruch 9, wobei das Epoxidharz ein Epoxidäquivalentgewicht von weniger als 500 g/Äq. aufweist.

11. Laminat nach einem der Ansprüche 1 bis 10, wobei die erste Kautschukzusammensetzung (FC) so beschaffen ist, dass die Menge an Epoxidhärter mindestens 1 phr beträgt.

12. Laminat nach einem der Ansprüche 1 bis 11, wobei die zweite Kautschukzusammensetzung (SC) so beschaffen ist, dass die Menge an Epoxidhärter mindestens 20 phr beträgt.

13. Laminat nach einem der Ansprüche 1 bis 12, wobei jede der Kautschukzusammensetzungen so beschaffen ist, dass der Epoxidhärter mindestens eine Verbindung aus der Gruppe bestehend aus Aminverbindungen, Amidverbindungen, Isocyanatverbindungen, aromatischen Diazoniumsalzverbindungen, Guanidinoverbindungen, Thiolverbindungen, aromatischen Sulfoniumsalzverbindungen, Phenolverbindungen, Säureanhydridverbindungen, basischen Verbindungen, die aktiven Wasserstoff enthalten, und den Kombinationen davon umfasst.

14. Laminat nach einem der Ansprüche 1 bis 13, wobei jede der Kautschukzusammensetzungen so beschaffen ist, dass der Epoxidhärter eine Viskosität von mindestens 1000 mPa·s bei 25 °C aufweist.

15. Reifen, umfassend ein Laminat nach einem der Ansprüche 1 bis 14, vorzugsweise wobei der Reifen eine Lauffläche umfasst, die ein Laminat nach einem der Ansprüche 1 bis 14 umfasst.

## Revendications

1. Stratifié comprenant au moins deux parties superposées comprenant une première partie constituée d'une première composition de caoutchouc (FC) et une seconde partie constituée d'une seconde composition de caoutchouc (SC) ;
dans laquelle chacune des compositions de caoutchouc est à base d'au moins :
- une matrice élastomère ;
- une charge renforçante ; et
- au moins un d'un époxy ou d'un durcisseur époxy ;
dans laquelle la quantité en pce de l'époxy dans la première composition de caoutchouc (FC) est inférieure à celle dans la seconde composition de caoutchouc (SC), et dans laquelle la quantité en pce du durcisseur époxy dans la première composition de caoutchouc (FC) est supérieure à celle dans la deuxième composition de caoutchouc (SC).

2. Stratifié selon la revendication 1, dans lequel chacune des compositions de caoutchouc est telle que la matrice élastomère comprend au moins un élastomère diénique choisi dans le groupe consistant en polybutadiènes, caoutchouc naturel, polyisoprènes synthétiques, copolymères de butadiène, copolymères d'isoprène et leurs combinaisons.

3. Stratifié selon la revendication 1 ou la revendication 2, dans lequel chacune des compositions de caoutchouc est telle que la quantité de charge renforçante est supérieure à 10 phr.

4. Stratifié selon l'une quelconque des revendications 1 à 3, dans lequel au moins l'une des compositions de caoutchouc est telle que la charge renforçante comprend majoritairement du noir de carbone.

5. Stratifié selon l'une quelconque des revendications 1 à 4, dans lequel au moins une des compositions de caoutchouc est telle que la charge renforçante comprend majoritairement une charge inorganique renforçante, de préférence dans laquelle la charge inorganique renforçante comprend majoritairement de la silice.

6. Stratifié selon l'une quelconque des revendications 1 à 5, dans lequel la première composition de caoutchouc (FC) est telle que la quantité d'époxy est inférieure à 20 pce.

7. Stratifié selon l'une quelconque des revendications 1 à 6, dans lequel la seconde composition de caoutchouc (SC) est telle que la quantité d'époxy est d'au moins 1 pce.

8. Stratifié selon l'une quelconque des revendications 1 à 7, dans lequel chacune des compositions de caoutchouc est telle que l'époxy comprend au moins une résine époxy comprenant au moins deux groupes fonctionnels époxydes dans une molécule.

9. Stratifié selon la revendication 8, dans lequel la résine époxy a une viscosité inférieure à 2000 mP0a.s à 150°C.

10. Stratifié selon la revendication 8 ou la revendication 9, dans lequel la résine époxy a un poids d'équivalent époxy inférieur à 500 g/eq.

11. Stratifié selon l'une quelconque des revendications 1 à 10, dans lequel la première composition de caoutchouc (FC) est telle que la quantité de durcisseur époxy d'au moins 1 pce.

12. Stratifié selon l'une quelconque des revendications 1 à 11, dans lequel la seconde composition de caoutchouc (SC) est telle que la quantité de durcisseur époxy est inférieure à 20 phr.

13. Stratifié selon l'une quelconque des revendications 1 à 12, dans lequel chacune des compositions de caoutchouc est telle que le durcisseur époxy comprend au moins un composé choisi dans le groupe consistant en composé(s) amine(s), composé(s) amide(s), composé isocyanate( s), composé(s) de sel de diazonium aromatique, composé(s) de guanidino, composé(s) de thiol, composé(s) de sel de sulfonium aromatique, composé(s) de phénol, composé(s) d'anhydride d'acide, composé(s) d'hydrogène actif basique et leurs combinaisons.

14. Stratifié selon l'une quelconque des revendications 1 à 13, dans lequel chacune des compositions de caoutchouc est telle que le durcisseur époxy a une viscosité d'au moins 1000 mPa.s à 25°C.

15. Pneumatique comprenant un stratifié selon l'une quelconque des revendications 1 à 14, de préférence dans lequel le pneumatique comprend une bande de roulement comprenant un stratifié selon l'une quelconque des revendications 1 à 14.
